# EUROPEAN PATENT APPLICATION

(11) **EP 3 521 664 A1**
(43) Date of publication of application: **07.08.2019**
(21) Application number: 17855867.2
(22) Date of filing: 20.09.2017
(51) Int. Cl.: F16H 63/32, F16H 63/20

(54) **TRANSMISSION**

(30) Priority: 29.09.2016 JP 2016190709
(71) Applicant: Aisin AI Co., Ltd., Nishio-shi, Aichi 445-0006 (JP)
(72) Inventor: NINOMIYA, Ryosuke, Nishio-shi Aichi 445-0006 (JP); ICHIKAWA, Masaya, Nishio-shi Aichi 445-0006 (JP); OSAWA, Hideya, Nishio-shi Aichi 445-0006 (JP)
(74) Representative: TBK
(86) International application number: PCT/JP2017/033843
(87) International publication number: WO 2018/061912

(57) **Abstract**

In a transmission (100), swing-type shift forks (F2, F3) have: bodies (F2a, F3a); fork heads (F2d, F3d); pads (F2c, F3c); and supports (F2b, F3b) that are provided between the fork heads (F2d, F3d) and the pads (F2c, F3c). In order to achieve downsizing and lightening as well as prevention of gear slip-off, the supports (F2b, F3b) are arranged at positions separated, toward the pads (F2c, F3c), from reference support points (P2, P3) where rotational moments in connected bodies (A2, A3), which are formed by connecting a second sleeve (S2) and a third sleeve (S3) with the shift forks (F2, F3) and the pads (F2c, F3c), become zero.

## Description

### TECHNICAL FIELD

This invention relates to a transmission equipped with a shift fork.

### BACKGROUND OF THE TECHNOLOGY

Conventionally, a shift mechanism for a transmission, such as a type disclosed in Patent Literature 1, is known. The conventional shift mechanism for a transmission is equipped with a swing type fifth-sixth speed gear shift fork and a reverse speed gear shift fork which are swingably provided at an apparatus casing by means of pin. The conventional shift mechanism for a transmission is further equipped with a first-second speed gear shift fork and a third-fourth speed gear shift fork fixed to a shift rod which is rotatably supported on the apparatus casing.

According to the conventional shift mechanism for a transmission, a shift member for swinging the swing type fifth-sixth speed gear shift fork and the reverse speed gear shift fork relative to the shift rod is provided and when the gear is shifted to the fifth speed, sixth speed or the reverse speed, the corresponding shift fork is configured to be rotated (swung) by the shift member using the pin as the fulcrum. Further, according to the conventional shift mechanism for a transmission, the fifth speed or the sixth speed or the reverse speed is established by moving the sleeve or the idler gear along in an axis line of the shift rod by thus rotated swing type shift forks. Still further, according to the conventional shift mechanism for a transmission, when the gear is shifted to the first speed, second speed, third speed or the fourth speed, the first-second speed gear shift fork and the third-fourth speed gear shift fork are moved with the shift rod. And according to this conventional shift mechanism, the first speed to the fourth speed are established by moving the sleeve along in an axis line of the shift rod by thus moved shift forks.

### DOCUMENT LIST OF PRIOR ARTS

### PATENT LITERATURE

Patent Literature 1: JP08 (1996) -152063 A

### DISCLOSURE OF INVENTION

### PROBLEMS TO BE SOLVED

It is noted here that when the sleeve is in gear engagement with meshing teeth of the speed change gear, if a force is acted in a direction where the engagement of the speed change gear with the sleeve is separated, caused by, for example, an acceleration or a deceleration of the vehicle, the sleeve may be disengaged from the speed change gear, i.e., a so-called "gear jumping-out" occurs. In order to prevent such "gear jumping out" phenomenon, a load is adjusted when the sleeve is engaged with the gear, or a load is added by providing a lock ball to the shift fork. For example, in order to increase the load when the sleeve is engaged with the gear, the thickness of each gear tooth has to be thickened and as a result, the size of transmission per se becomes large. Further, when the lock ball with a large load is added to the shift fork, a good shift feeling may be deteriorated.

The present invention was made in consideration of the above issues and problems of the related arts and it is an object of the invention to provide a compact size, light weight transmission which can prevent occurrence of gear jumping-out phenomenon.

### MEANS FOR SOLVING THE PROBLEM

The transmission associated with the invention of claim 1 to solve the above problems includes a shift select shaft housed in a housing and moving along in an axis line and at the same time rotating about the axis line, a shift fork arranged facing the shift select shaft and connecting the shift select shaft and a sleeve disposed in the housing and arranged between a low speed side gear and a high speed side gear which are located adjacent to each other, the sleeve being movable between the low speed side gear and the high speed side gear and an inner lever provided at the shift select shaft and engaging with the shift fork when positioned at a first rotation position in response to a rotation of the shift select shaft about the axis line and disengaging from the shift fork when positioned at a second rotation position which is different from the first rotation position, in response to the rotation of the shift select shaft about the axis line, wherein the shift fork includes a U-shaped main body portion, an engaging portion provided at the main body portion and engaging with the inner lever which is positioned at the first rotation position, a pair of connecting portions provided at both ends of the main body portion and connected to the sleeve and a pair of supporting portions provided at both sides of the main body portion and rotatably supporting the shift fork between the engaging portion and the pair of connecting portions relative to the housing and wherein when the engaging portion engages with the inner lever and the shift select shaft moves along in the axis line, the shift fork is rotated relative to the housing about the pair of supporting portions as a rotation center thereof and at the same time the sleeve connected to the pair of connecting portions is configured to be movable between the low speed side gear and the high speed side gear and the pair of supporting portions is provided at a point between a pair of reference fulcrums and the pair of connecting portions, wherein a rotational moment of a connecting body formed by connecting the sleeve with the shift fork becomes zero at the pair of reference fulcrums.

According to the structure above, in the connecting body formed by connecting the shift fork with the sleeve, the pair of supporting portions can be provided between the reference fulcrums and the pair of connecting portions. Thus, when a force against the connecting body which may generate a gear jumping-out phenomenon in a gear jumping-out direction, the rotational moment generated around the pair of supporting portions can act on the sleeve as a force generated in the gear jumping-out direction to prevent the gear jumping-out phenomenon. Accordingly, without any additional components, etc. to the transmission, a gear jumping-out phenomenon can be prevented achieving down-sizing and reduction of weight of the transmission. Further, no load adjustment is needed upon gear engagement with the sleeve and without adding a load such as addition of lock ball, the gear jumping-out can be effectively prevented. Thus, a good shift feeling can be obtained.

### BRIEF EXPLANATION OF ATTACHED DRAWINGS

Fig. 1 is an explanation view of the transmission;
Fig. 2 is a perspective view of the shift mechanism;
Fig. 3 is a perspective view for explaining the structure of first shift fork;
Fig. 4 is a perspective view for explaining the structure of second shift fork and the structure of third shift fork;
Fig. 5 is a cross-sectional view of the housing to which the second shift fork and the third shift fork are assembled;
Fig. 6 is a view explaining relationship of gear jumping-out force, the rotational moment and the gear jumping-out preventing force; and
Fig. 7 is a view explaining the shift pattern.

### THE EMBODIMENTS FOR IMPLEMENTING THE INVENTION

### (Structure of Transmission)

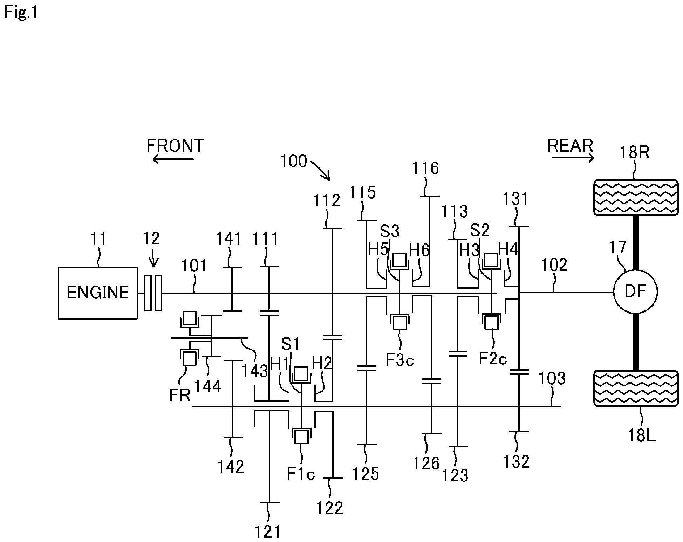

The transmission 100 which corresponds to the transmission according to the embodiment will be explained hereinafter with reference to Fig. 1. It is noted here that in Fig. 1, the side where the engine 11 is located is defined to be the front side of the transmission 100 and the side where the differential (DF) is located is defined to be the rear side of the transmission 100. Further, the front/rear direction of the transmission 100 is defined to be the axis line direction.

As indicated in Fig. 1, the transmission 100 according to the embodiment of the invention includes an input shaft 101, an output shaft 102, a counter shaft 103, a first drive gear 111 through a sixth drive gear 116, a first driven gear 121 through a sixth driven gear 126, an output shaft side reduction gear 131, a counter shaft side reduction gear 132, a reverse drive gear 141, a reverse driven gear 142, an idler shaft 143, a reverse idler gear 144, a first sleeve S1 through a third sleeve S3, a first shift fork F1 through a third shift fork F3 and a reverse shift fork FR.

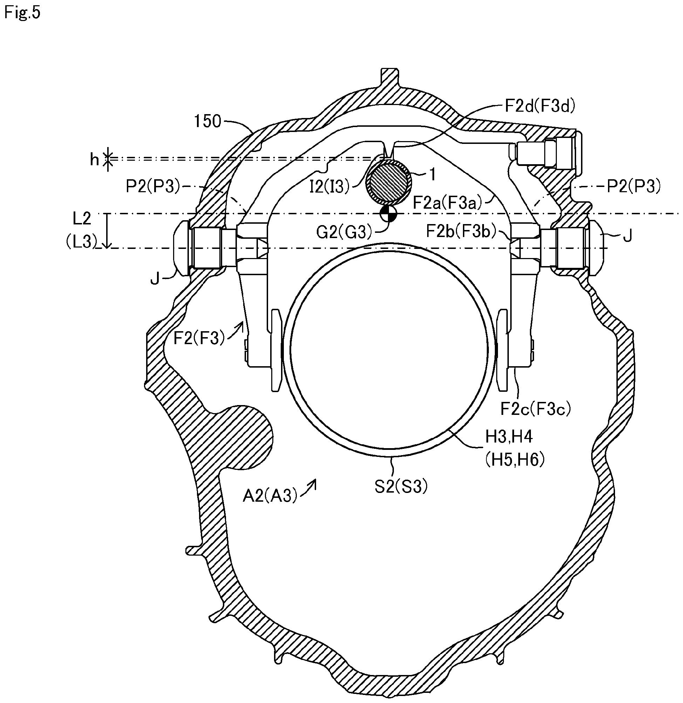

The input shaft 101, the output shaft 102 and the counter shaft 103 are rotatably provided at the housing 150 of the transmission 100 (See Fig. 5). The input shaft 101 is connected to the clutch 12 and via the clutch 12, the rotational torque is transmitted from the engine 11. The output shaft 102 is provided co-axially with the input shaft 101 at the rear side of the input shaft 102. The differential (DF) 17 which absorbs the rotational speed difference between the drive wheels 18R and 18L is connected to the output shaft 102. The counter shaft 103 is provided in parallel with the input shaft 101 and the output shaft 102.

The first drive gear 111 and the second drive gear 112 are fixed on the input shaft 101. The fifth drive gear 115, the sixth drive gear 116 and the third drive gear 113 are idly rotatably mounted on the input shaft 101. According to this embodiment, from front side to rear side of the input shaft 101, the first drive gear 111, the second drive gear 112, the fifth drive gear 115, the sixth drive gear 116 and the third drive gear 113 are arranged in this order.

The first driven gear 121 and the second driven gear 122 are idly rotatably mounted on the counter shaft 103. The fifth driven gear 125, the sixth driven gear 126 and the third driven gear 123 are fixed to the counter shaft 103. According to this embodiment, from the front side to the rear side of the counter shaft 103, the first driven gear 121, the second driven gear 122, the fifth driven gear 125, the sixth driven gear 126 and the third driven gear 123 are provided in this order.

The first drive gear 111 and the first driven gear 121 are mutually engaged with each other. The second drive gear 112 and the second driven gear 122 are mutually engaged with each other. The third drive gear 113 and the third driven gear 123 are mutually engaged with each other. The fifth drive gear 115 and the fifth driven gear 125 are mutually engaged with each other. The sixth drive gear 116 and the sixth driven gear 126 are mutually engaged with each other.

The gear diameters of the first drive gear 111, the second drive gear 112, the third drive gear 113, the fifth drive gear 115 and the sixth drive gear 116 become larger in this order. The gear diameters of the first driven gear 121, the second driven gear 122, the third driven gear 123, the fifth driven gear 125 and the sixth driven gear 126 become smaller in this order. It is noted that the gear diameter of the fifth drive gear 115 is larger than that of the fifth driven gear 125.

The output shaft side reduction gear 131 is provided at the output shaft 102. The counter shaft side reduction gear 132 is provided on the counter shaft side 103. The output shaft side reduction gear 131 and the counter shaft side reduction gear 132 are mutually engaged with each other. The gear diameter of the counter shaft side reduction gear 132 is set to be smaller than the gear diameter of the output shaft side reduction gear 131. Therefore, the rotational speed of the engine 11 (in more detail, the input shaft 101) between the counter shaft side reduction gear 132 and the output shaft side reduction gear 131 is decelerated to thereby increase the rotational torque from the engine 11.

The idler shaft 143 is rotatably provided at the housing 150 of the transmission 100 in parallel with the input shaft 101 and the counter shaft 103. The reverse drive gear 141 is fixed to the input shaft 101. The reverse driven gear 142 is fixed to the counter shaft 103. The reverse idler gear 144 is provided at the idler shaft 143 to be movable along in an axis line direction (front/rear direction). The reverse idler gear 144 engages with the reverse shift fork FR. The reverse idler gear 144 meshes with the reverse drive gear 141 and the reverse driven gear 142 or does not mesh with the reverse drive gear 141 and the reverse driven gear 142.

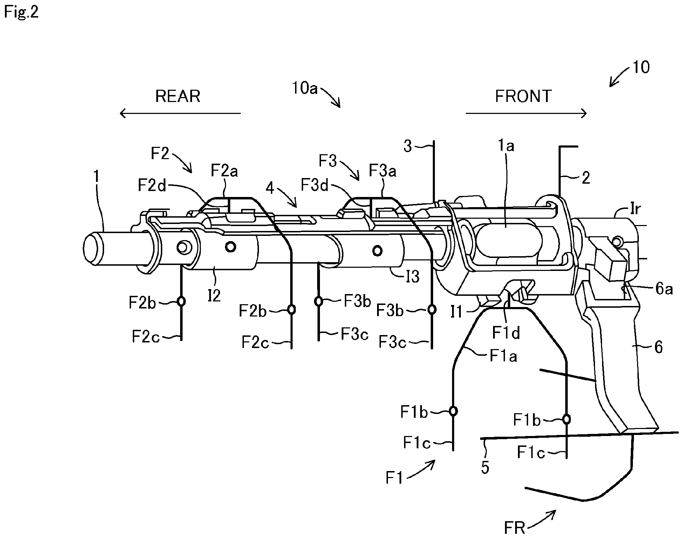

The first sleeve S1 is provided on the counter shaft 103 between the first driven gear 121 which is the low speed side gear and the second driven gear 122 which is the high speed side gear to prohibit a relative rotation but to allow a movement along in an axis line direction. The first sleeve S1 is connected to the pair of pad portions F1c (See Fig. 2) which serves as the connecting portion of the first shift fork F1 (See, for example, Fig. 5). The first sleeve S1 engages (meshes) with or disengages from one of the first meshing teeth H1 formed on the first driven gear 121 and the second meshing teeth H2 formed on the second driven gear 122, depending on the axis line position of the first sleeve S1.

The second sleeve S2 is provided on the input shaft 101 between the third drive gear 113 which is the low speed side gear and the output shaft side reduction gear 131 adjacent thereto which is the high speed side gear to prohibit a relative rotation with the input shaft 101 but to allow a movement along in the axis line direction relative thereto. The second sleeve S2 is connected to the pair of pad portions F2c (See Fig. 2) which serves as the connecting portion of the second shift fork F2 (See, for example, Fig. 5). The second sleeve S2 engages (meshes) with or disengages from one of the third meshing teeth H3 formed on the third drive gear 113 and the fourth meshing teeth H4 formed on the output shaft side reduction gear 131, depending on the axis line position of the second sleeve S2.

The third sleeve S3 is provided on the input shaft 101 between the fifth drive gear 115 which is the low speed side gear and the sixth drive gear 116 adjacent thereto which is the high speed side gear to prohibit a relative rotation with the input shaft 101 but to allow a movement along in the axis line direction relative thereto. The third sleeve S3 is connected to the pair of pad portions F3c (See Fig. 2) which serves as the connecting portion of the third shift fork F3 (See, for example, Fig. 5). The third sleeve S3 engages (meshes) with or disengages from one of the fifth meshing teeth H5 formed on the fifth drive gear 115 and the sixth meshing teeth H6 formed on the sixth drive gear 116, depending on the axis line position of the third sleeve S3.

It is noted here that a synchronizer mechanism is provided between each of the first sleeve S1 through third sleeve S3 and each of the first meshing teeth H1 through sixth meshing teeth H6 for synchronizing the rotational speed difference between the first sleeve S1 through third sleeve S3 and each of the first meshing teeth H1 through sixth meshing teeth H6. The synchronizer mechanism used here is a well-known technology mechanism and the explanation thereof will be omitted. Further, hereinafter, the combination of mutually adjacently positioned gears, such as the first speed to second speed, the third speed to fourth speed, and fifth speed to sixth speed gears is called as "facing speed change stage".

### (Shift Mechanism)

The shift mechanism 10 will be explained hereinafter with reference to Figs. 2 through 7. The shift mechanism 10 is configured to establish plurality of speed stages of the transmission 100. The shift mechanism 10 includes, as shown in Fig. 2, the shift select shaft 1 (hereinafter simply called as "shaft 1"), the shift outer lever 2, the select outer lever 3, the interlock member 4, the reverse shift fork shaft 5 and the reverse shift fork connecting member 6. Further, the shift mechanism 10 includes the first shift fork F1 through the third shift fork F3, the reverse shift fork FR, the first inner lever I1 through the third inner lever I3 and the reverse inner lever Ir.

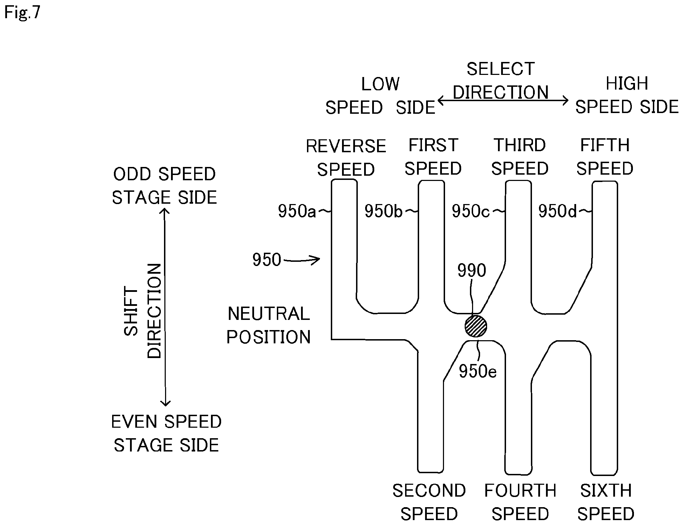

The shaft 1 is provided on the housing 150 of the transmission 100 to be movable in the axis line direction and rotatable about the axis line. As shown in Fig. 2, the shift select shaft head 1a is fixed to the shaft 1 at the front side. The shift select shaft head 1a is connected to the shift outer lever 2 and the select outer lever 3 via a well-known link mechanism as shown in Fig. 2. The shift outer lever 2 and the select outer lever 3 are respectively connected to the shift select lever 990 (See Fig. 7) which is provided at the driver's seat side via the speed change cables (not shown).

The shift outer lever 2 is configured such that when the shift select lever 990 is shifted in a shift direction (See Fig. 7) for shift operation, the operation force inputted to the shift select lever 990 is transmitted via the speed change cable and the shift outer lever 2 is rotated. When the shift outer lever 2 is rotated, the operation force inputted to the shift select lever 990 is transmitted to the shaft 1. Thus, the shaft 1 is moved in the axis line direction.

The select outer lever 3 is configured such that when the shift select lever 990 is selected in a select direction (See Fig. 7) for select operation, the operation force inputted to the shift select lever 990 is transmitted via the speed change cable and the select outer lever 3 is rotated. When the select outer lever 3 is rotated, the operation force inputted to the shift select lever 990 is transmitted to the shift select shaft head 1a. Thus, the shaft 1 is rotated in the axis line direction.

The shift pattern which indicates a rotation range of the shift select lever 990 will be explained here with reference to Fig. 7. The shift pattern 950 includes reverse gate 950a, 1 - 2 speed gate 950b, 3 - 4 speed gate 950c and 5 - 6 speed gate 950d. These gates are arranged in parallel and the neutral positions of these gates are in communication through the select gate 950e. It is noted here that the reverse gate 950a, the 1 - 2 speed gate 950b, the 3 - 4 speed gate 950c and the 5 - 6 speed gate 950d are formed in the shift direction which is the front/rear direction. Further, each neutral position of the reverse gate 950a, the 1 - 2 speed gate 950b, the 3 - 4 speed gate 950c and the 5 - 6 speed gate 950d is positioned at the middle position in the shift direction. The neutral position of the reverse gate 950a is positioned at the end of the reverse gate 950a and according to this embodiment, at the lower end of the reverse gate 950a. Further, the select gate 950e is formed in the select direction which is the right/left direction.

Returning to the explanation regarding Fig. 2, the first shift fork F1, the third shift fork F3 and the second shift fork F2 are formed on the shaft 1 in this order from front side to rear side. The explanation hereinafter may designate the first shift fork F1, the second shift fork F2 and the third shift fork F3 collectively as "the shift fork F1, F2 and F3". The third shift fork F3 and the second shift fork F2 are positioned facing to each other riding over the shaft 1. The first shift fork F1 through third shift fork F3 are the gate shaped swing type shift fork as shown in Figs. 2, 3 and 4 and each of the respective shift forks F1 through F3 includes a main body F1a through F3a, a pair of supporting portions F1b through F3b and a pair of pad portions F1c through F3c as connecting portion. The first shift fork F1 through the third shift fork F3 connect the shaft 1 and the first sleeve S1 through third sleeve S3 respectively.

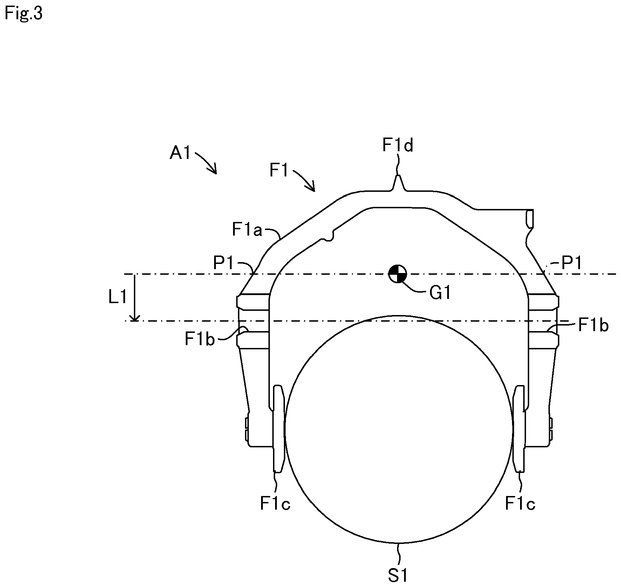

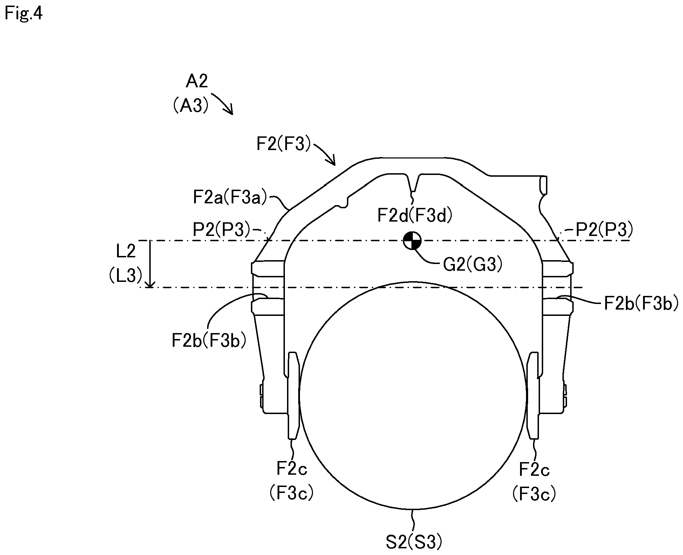

Each main body F1a, F2a and F3a is formed in a U-shape. As shown in Figs. 2 and 3 in detail, a fork head F1d as the engaging portion is integrally formed on the first shift fork F1 and is projecting towards the upper surface side of the main body portion F1a of the first shift fork F1. Further, as shown in Figs. 2 and 4 in detail, a fork head F2d as the engaging portion is projecting towards the lower surface side, i.e., the surface facing to the shaft 1, of the main body portion F2a of the second shift fork F2. Further, as shown in Figs. 2 and 4 in detail, a fork head F3d as the engaging portion is projecting towards the lower surface side, i.e., the surface facing to the shaft 1, of the main body portion F3a of the third shift fork F3.

The pair of pad portions F1c of the first shift fork F1 is rotatably supported at both ends of the main body portion F1a, as shown in Fig. 3. The pair of pad portions F2c of the second shift fork F2 is rotatably supported at both ends of the main body portion F2a, as shown in Fig. 4. The pair of pad portions F3c of the third shift fork F3 is rotatably supported at both ends of the main body portion F3a, as shown in Fig. 4.

The pair of supporting portions F1b is provided at both sides of the main body portion F1a between the fork head F1d and the pair of pad portions F1c, as shown in Fig. 3. The pair of supporting portions F1b rotatably (swingably) supports the first shift fork F1 in the axis line direction relative to the housing 150 and the shaft 1 by engaging with a pair of pins J as the shaft body fixed to the housing 150, as shown in Fig. 5. It is noted that although Fig. 5 indicates the cases of the second shift fork F2 and the third shift fork F3, the first shift fork F1 is also configured to the same structure as those of the second shift fork F2 and the third shift fork F3.

As shown in Fig. 3, the first shift fork F1 is connected to the first sleeve S1 at the pair of pad portions F1c. In other words, the first shift fork F1 and the first sleeve S1 form the connecting body A1. The connecting body A1 includes a plurality of paired fulcrums located at both sides of the main body portion F1a of the first shift fork F1 and rotatably supporting the connecting body A1 relative to the housing 150. Among the plurality of paired fulcrums, one pair of reference fulcrums P1 exists where the rotational moment of the connecting body A1 becomes zero. When the connecting body A1 is supported at the housing 150 at the pair of reference fulcrums P1, the rotational moment of the connecting body A1 becomes zero and as shown in Fig. 5, the center of gravity G1 of the connecting body A1 positions on the line connecting the par of reference fulcrums P1. The pair of supporting portions F1b is provided at a position separated from the reference fulcrums P1 in the pair of pad portions F1c direction (according to the embodiment, separated by the distance L1 as shown in Fig. 3).

The pair of supporting portions F2b is provided at both sides of the main body portion F2a between the fork head F2d and the pair of pad portions F2c, as shown in Fig. 4. The pair of supporting portion F2b rotatably (swingably) supports the second shift fork F2 in the axis line direction relative to the housing 150 and the shaft 1 by engaging with a pair of pins J as the shaft body fixed to the housing 150, as shown in Fig. 5.

As shown in Fig. 4, the second shift fork F2 is connected to the second sleeve S2 at the pair of pad portions F2c. In other words, the second shift fork F2 and the second sleeve S2 form the connecting body A2. The connecting body A2 includes a plurality of paired fulcrums located at both sides of the main body portion F2a of the second shift fork F2 and rotatably supporting the connecting body A2 relative to the housing 150. Among the plurality of paired fulcrums, one pair of reference fulcrums P2 exists where the rotational moment of the connecting body A2 becomes zero. When the connecting body A2 is supported at the housing 150 at the pair of reference fulcrums P2, the rotational moment of the connecting body A2 becomes zero and as shown in Fig. 5, the center of gravity G2 of the connecting body A2 positions on the line connecting the par of reference fulcrums P2. The pair of supporting portions F2b is provided at a position separated from the reference fulcrums P2 in the pair of pad portions F2c direction (according to the embodiment, separated by the distance L2 as shown in Fig. 4).

The pair of supporting portions F3b is provided at both sides of the main body portion F3a between the fork head F3d and the pair of pad portions F3c, as shown in Fig. 4. The pair of supporting portion F3b rotatably (swingably) supports the third shift fork F3 in the axis line direction relative to the housing 150 and the shaft 1 by engaging with a pair of pins J as the shaft body fixed to the housing 150, as shown in Fig. 5.

As shown in Fig. 3, the third shift fork F3 is connected to the third sleeve S3 at the pair of pad portions F3c. In other words, the third shift fork F3 and the third sleeve S3 form the connecting body A3. The connecting body A3 includes a plurality of paired fulcrums located at both sides of the main body portion F3a of the third shift fork F3 and rotatably supporting the connecting body A3 relative to the housing 150. Among the plurality of paired fulcrums, one pair of reference fulcrums P3 exists where the rotational moment of the connecting body A3 becomes zero. When the connecting body A3 is supported at the housing 150 at the pair of reference fulcrums P3, the rotational moment of the connecting body A3 becomes zero and as shown in Fig. 5, the center of gravity G3 of the connecting body A3 positions on the line connecting the pair of reference fulcrums P3. The pair of supporting portions F3b is provided at a position separated from the reference fulcrums P3 in the pair of pad portions F3c direction (according to the embodiment, separated by the distance L3 as shown in Fig. 4).

Returning to the explanation in Fig. 2, the interlock member 4 is configured to be rotated integrally with the shaft 1, but to be prohibited from shifting in the axis line direction of the shaft 1. The interlock member 4 is configured such that when the shaft 1 and any one of the first through third shift forks F1 through F3 selected by a select operation and is shifted, the interlock member 4 prohibits rotation (swinging) of the shift forks F1 through F3 which are not selected by the select operation.

The longitudinal side of the reverse shift fork shaft 5 is attached to the housing 150 of the transmission 100 towards the axis line direction. The reverse shift fork FR is movably attached to the reverse shift fork shaft 5 in the axis line direction. The reverse shift fork connecting member 6 connects the reverse shift fork FR and the reverse shift fork shaft 5. The reverse shift fork connecting member 6 is provided with a reverse engaging portion 6a.

As shown in Fig. 2, the first inner lever I1 is formed integrally with the shift select shaft head 1a and is fixed to the shaft 1 together with the shift select shaft head 1a. As shown in Fig. 2, the second inner lever 12, the third inner lever I3 and the reverse inner lever Ir are fixed to the shaft 1 for example, by means of pin, etc.

The first inner lever I1 is rotated together with the shaft 1 and the shift select shaft head 1a and engages with the fork head F1d of the first shift fork F1 or disengages from the fork head F1d of the first shift fork F1. The second inner lever I2 is rotated together with the shaft 1 and engages with the fork head F2d of the second shift fork F2 or disengages from the fork head F2d of the second shift fork F2. The third inner lever I3 is rotated together with the shaft 1 and engages with the fork head F3d of the third shift fork F3 or disengages from the fork head F3d of the third shift fork F3. The reverse inner lever Ir is rotated together with the shaft 1 and engages with the reverse engaging portion 6a of the reverse shift fork connecting member 6 or disengages from the reverse engaging portion 6a of the reverse shift fork connecting member 6.

Depending on the angle of rotational direction of the shaft 1, one of the first inner lever 11, the second inner lever 12, the third inner lever I3 and the reverse inner lever Ir selectively engages with any one of the fork head F1d, the fork head F2d, the fork head F3d and the reverse engaging portion 6a which are positioned at corresponding inner levers I1 through I3 and Ir.

In more detail, when the shift select lever 990 positions at the 1-2 speed gate 950b of the select gate 950e by select operation, the shaft 1 positions at the first rotational position as "the first rotation position" and the first inner lever I1 engages with the fork head F1d. When the shaft 1 positions at "the second rotation position" which is different from the first rotational position, the first inner lever I1 disengages from the fork head F1d.

When the shift select lever 990 positions at the 3-4 speed gate 950c of the select gate 950e by select operation, the shaft 1 positions at the second rotational position as "the first rotation position" which is the position further rotated in a forward direction than the first rotational position and the second inner lever I2 engages with the fork head F2d. When the shaft 1 positions at "the second rotation position" which is different from the second rotational position, the second inner lever I2 disengages from the fork head F2d.

When the shift select lever 990 positions at the 5-6 speed gate 950d of the select gate 950e by select operation, the shaft 1 positions at the third rotational position as "the first rotation position" which is the position further rotated in a forward direction than the second rotational position, and the third inner lever I3 engages with the fork head F3d. When the shaft 1 positions at "the second rotation position" which is different from the third rotational position, the third inner lever I3 disengages from the fork head F3d.

When the shift select lever 990 positions at the reverse gate 950a of the select gate 950e by select operation, the shaft 1 positions at the reverse rotational position as "the first rotation position" which is the position further rotated in a reverse direction than the first rotational position, and the reverse inner lever Ir engages with the reverse engaging portion 6a of the reverse shift fork connecting member 6. When the shaft 1 positions at "the second rotation position" which is different from the reverse rotational position, the reverse inner lever Ir disengages from the reverse engaging portion 6a of the reverse shift fork connecting member 6.

Under the state that any one of the first inner lever I1 through the third inner lever I3 and the reverse inner lever Ir is engaged with any one of the fork heads F1d through F3d and the reverse engaging portion 6a of the reverse shift fork connecting member 6 which are positioned corresponding to the respective inner levers, when the shift select lever 990 is shifted in the shift direction, the shaft 1 moves along in the axis line direction.

Thus, when the fork head F1d of the first shift fork F1 engages with the first inner lever 11, only the fork head F1d moves in the axis line direction together with the shaft 1 and the first inner lever 11. Since the first shift fork F1 is rotatably (swingably) supported on the housing 150 by the supporting portions F1d, the pad portions F1c and the first sleeve S1 move in a reverse direction relative to the moving direction of the fork head F1d (i.e., moving direction of the shaft 1). In other words, the first shift fork F1 includes a reverse mechanism which reversely moves the first sleeve S1 by reversing the moving direction of the shaft 1 by rotatably (swingably) supporting the first shift fork F1 about the supporting portions F1b as the rotation center. The first sleeve S1 is provided between the facing speed change stages of the first speed and the second speed, depending on the moving direction by the rotation (swinging) of the first shift fork F1, the sleeve S1 engages with the meshing teeth H1 or the meshing teeth H2 to establish the first speed change stage or the second speed change stage of the transmission 100.

In other words, the first shift fork F1 rotates about the pair of supporting portions F1b as the rotation center relative to the housing 150, when the fork head F1d engages with the first inner lever I1 and the shaft 1 moves. Then, the first shift fork F1 is configured such that the first shift fork F1 moves the first sleeve S1 which is connected to the pair of pad portions F1c to the first driven gear 121 which is positioned at the low speed side gear or the second driven gear 122 which is positioned at the high speed side gear.

Further, when the fork head F2d of the second shift fork F2 is engaged with the second inner lever 12, only the fork head F2d moves in the axis line direction together with the shaft 1 and the second inner lever 12. The second shift fork F2 is rotatably (swingably) supported on the housing 150 about the supporting portion F2b as the rotation center and accordingly, the pad portions F2c and the second sleeve S2 are moved in the opposite direction to the moving direction of the fork head F2d (i.e., the moving direction of the shaft 1). In other words, the second shift fork F2 includes a reverse mechanism which reversely moves the second sleeve S2 by reversing the moving direction of the shaft 1 by being rotatably (swingably) supported by the supporting portions F2b. The second sleeve S2 is provided between the facing speed change stages of the third speed and the fourth speed, depending on the moving direction by the rotation (swinging) of the second shift fork F2, the sleeve S2 engages with the meshing teeth H3 or the meshing teeth H4 to establish the third speed change stage or the fourth speed change stage of the transmission 100.

In other words, the second shift fork F2 rotates about the pair of supporting portions F2b as the rotation center relative to the housing 150, when the fork head F2d engages with the second inner lever I2 and the shaft 1 moves. Then, the second shift fork F2 is configured such that the second shift fork F2 moves the second sleeve S2 which is connected to the pair of pad portions F2c to the third drive gear 113 which is positioned at the low speed side gear or to the output shaft side reduction gear 131 which is positioned at the high speed side gear.

Further, when the fork head F3d of the third shift fork F3 is engaged with the third inner lever 13, only the fork head F3d moves in the axis line direction together with the shaft 1 and the third inner lever 13. The third shift fork F3 is rotatably (swingably) supported on the housing 150 about the supporting portion F3b as the rotation center and accordingly, the pad portions F3c and the third sleeve S3 are moved in the opposite direction to the moving direction of the fork head F3d (i.e., the moving direction of the shaft 1). In other words, the third shift fork F3 includes a reverse mechanism which reversely moves the third sleeve S3 by reversing the moving direction of the shaft 1 by being rotatably (swingably) supported by the supporting portions F3b. The third sleeve S3 is provided between the facing speed change stages of the fifth speed and the sixth speed, depending on the moving direction by the rotation (swinging) of the third shift fork F3, the sleeve S3 engages with the meshing teeth H5 or the meshing teeth H6 to establish the fifth speed change stage or the sixth speed change stage of the transmission 100.

In other words, the third shift fork F3 rotates about the pair of supporting portions F3b as the rotation center relative to the housing 150, when the fork head F3d engages with the third inner lever I3 and the shaft 1 moves. Then, the third shift fork F3 is configured such that the third shift fork F3 moves the third sleeve S3 which is connected to the pair of pad portions F3c to the fifth drive gear 115 which is positioned at the low speed side gear or to the sixth drive gear 116 which is positioned at the high speed side gear.

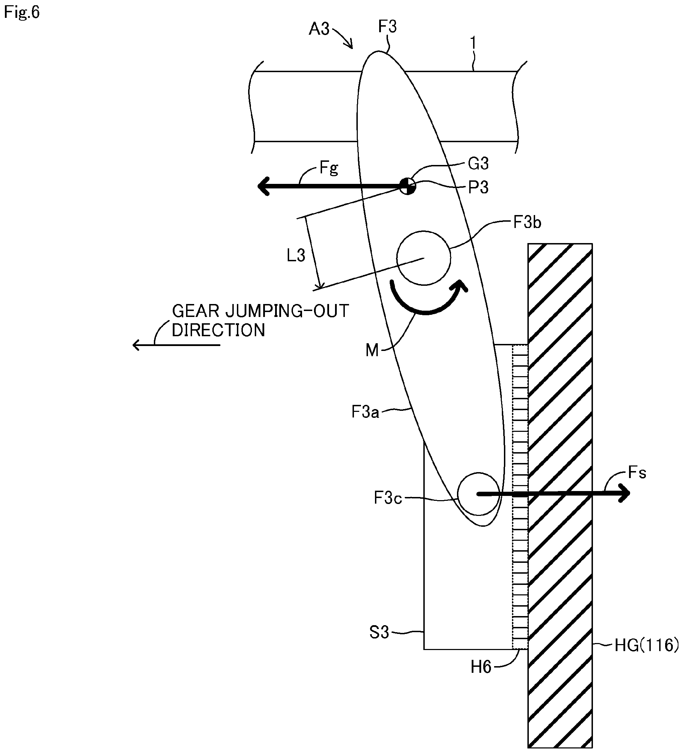

It is noted here that as explained above, the first shift fork F1 through the shift third fork F3 on which the supporting portions F1b through the supporting portions F3b are formed can maintain the state that a speed change stage is established by moving any one of the first sleeve S1 through the third sleeve S3, even when, for example, an acceleration is generated at the vehicle. Hereinafter, such operation will be explained with reference to Fig. 6, exampling the connecting body A3 which establishes the fifth speed change stage or the sixth speed change stage, both of which are the high speed change side stages.

At the high speed change stage, the thickness of the teeth of the meshing teeth H5 and the meshing teeth H6 are small and the moving amount (stroke amount) of the third sleeve S3 becomes small. As a result, it becomes difficult to increase the load under the engagement of the third sleeve S3 with the meshing teeth H5 or the meshing teeth H6. Accordingly, it is necessary for the third sleeve S3 engaging with the meshing teeth H5 or H6 not to move by an occurrence of gear jumping out phenomenon, even the force (hereinafter this force is called as "force for gear jumping-out") applied to the third sleeve S3 in a direction where the third sleeve S3 is disengaged from the meshing teeth H5 or the meshing teeth H6. In other words, it is necessary for the third sleeve S3 not to generate a so-called gear jumping-out phenomenon.

The pair of supporting portions F3b of the third shift fork F3 is positioned separated from the pair of reference fulcrums P3 by the distance "L3" in the pair of pad portions F3c direction. The connecting body A3 is rotatably supported by the pair of supporting portions F3b. Thus, as shown in Fig. 6, the force Fg for gear jumping out acting on the connecting body A3 acts on the mass (inertia) of the connecting body A3 at the center of gravity G3 to thereby generate a rotational moment M acting around the supporting portions F3b. It is noted that the pair of supporting portions F3b is provide to be separated from the pair of reference fulcrums P3 by the distance "L3" in the pair of pad portions F3c direction. Accordingly, the mass (inertia) from the pair of supporting portions F3b to the fork head F3d becomes larger than the mass (inertia) from the pair of supporting portions F3b to the third sleeve S3. As a result, the direction of the rotational moment M generated around the supporting portions F3b is the direction that the third sleeve S3 moves in an opposite direction to the gear jumping out direction from the pair of supporting portions F3b to the third sleeve S3, as shown in Fig. 6.

Accordingly, as shown in Fig. 6, the third sleeve S3 is engaged with the meshing teeth H6 and the power is transmitted through the speed change gear HG (sixth drive gear 116) as the speed change stage. Under this state, if the force Fg for gear jumping out is applied, the third sleeve S3 is pushed towards the meshing teeth H6 and speed change gear HG by the generated rotational moment M. In other words, the third sleeve S3 receives a force Fs for preventing gear jumping-out in a direction opposite to the gear jumping out direction.

Further, under the state that the third shift fork F3 is rotated (swung), as shown in Fig. 5, the fork head F3d as the engaging portion is separated from the third inner lever I3 to form a gap with distance "h". Thus, the mass of the shaft 1 and the third inner lever I3 do not act on the connecting body A3 and as a result, the rotational moment M generated around the supporting portions F3b is generated so that the force Fs for preventing gear jumping out is generated to always act on the third sleeve S3.

Further, by forming the gap with distance "h", unnecessary vibrations or the like are prevented from transmitting from the shaft 1 to the connecting body A3 through the third inner lever 13. Thus, by preventing the transmission of such unnecessary vibrations, the fluctuation of the rotational moment M generated about the supporting portions F3b can be prevented. Thus, the rotational moment M generates the force Fs for preventing gear jumping-out, generating always a proper magnitude force to act on the third sleeve S3.

It is noted here that similar to the case of the connecting body A3, in the case of the connecting body A1 or the connecting body A2, the rotational moment M generates the force Fs for preventing gear jumping out, generating always a proper magnitude force to act on the first sleeve S1 or the second sleeve S2. Further, similarly to the case of the connecting body A3, in the case of connecting body A1 or the connecting body A2, by providing a gap with distance "h", the fluctuation of the rotational moment M generated around the supporting portions F1b or F2b can be prevented. Thus, the rotational moment M generates the force Fs for preventing gear jumping out, generating always a proper magnitude force to act on the first sleeve S1 or the second sleeve S2.

As explained above, the transmission 100 according to the embodiment includes the shaft 1, the first shift fork F1 through the third shift fork F3, and the first inner lever I1 through the third inner lever 13. The shaft 1 is housed in the housing 150 and moves in the axis line direction and at the same time rotates about the axis line. The first shift fork F1 through the third shift fork F3 are arranged facing to the shaft 1, respectively. The first shift fork F1 through the third shift fork F3 connect the shaft 1 with the respective first sleeve S1 through the third sleeve S3. The first sleeve S1 through the third sleeve S3 are disposed between the mutually adjacently arranged first driven gear 121, the third drive gear 113 and the fifth drive gear 115 as the low speed side gears and the second driven gear 122, the output shaft side reduction gear 131 and the sixth drive gear 116 as the high speed side gears housed in the housing 150 and are movable between the high speed side gears and the low speed side gears. The first inner lever I1 through the third inner lever I3 are provided on the shaft 1 and under the position of the first rotation position in response to the rotation of the shaft 1 about the axis line, the first inner lever I1 through the third inner lever I3 engage with any one of the first shift fork F1 through the third shift fork F3 and under the position of the second rotation position which is different from the first rotation position in response to the rotation of the shaft 1 about the axis line, the first inner lever I1 through the third inner lever I3 disengage from the one of the first shift fork F1 through the third shift fork F3 which has engaged therewith at the first rotation position.

The first shift fork F1 through the third shift fork F3 respectively include a U-shaped main body portion F1a through F3a, a fork head F1d through F3d as an engaging portion provided at the main body portion F1a through F3a and engaging with any one of the first inner lever I1 through the third inner lever I3 which is positioned at the first rotation position, a pair of pad portions F1c through F3c as a pair of connecting portions provided at both ends of the main body portion F1a through F3a and connected to the first sleeve S1 through the third sleeve S3 and a pair of supporting portions F1b through F3b provided at both sides of the main body portion F1a through F3a and rotatably supporting the first shift fork F1 through the third shift fork F3 between the fork head F1d through F3d and the pair of pad portions F1c through F3c relative to the housing 150.

When the shaft 1 moves along in the axis line by the engagement of any one of the fork heads F1d through F3d with any one of corresponding first inner lever I1 through the third inner lever 13, the first shift fork F1 through the third shift fork F3 rotate about the pair of supporting portions F1b through F3b relative to the housing 150. At the same time, the first sleeve S1 through the third sleeve S3 connected to the pair of pad portions F1c through F3c is configured to be movable between the low speed side gear and the high speed side gear by the rotation of the first shift fork F1 through the third shift fork F3 relative to the housing 150.

The pair of supporting portions F1b through F3b is provided at a point between a pair of reference fulcrums P1 through P3 and the pair of pad portions F1c through F3c wherein a rotational moment of a connecting body A1 through A3 formed by connecting the first sleeve S1 through the third sleeve S3 with the first shift fork F1 through the third shift fork F3 become zero at the pair of reference fulcrums P1 through P3.

According to the structure above, with respect to the connecting body A1 through A3 formed by connecting the first shift fork F1 through the third shift fork F3 with the first sleeve S1 through the third sleeve S3, the pair of supporting portions F1b through F3b can be provided between the reference fulcrums P1 through P3 and the pair of pad portions F1c through F3c. Thus, when the force Fg for gear jumping out against the connecting body A1 through A3 in the gear jumping-out direction, the rotational moment M generated around the pair of supporting portions F1b through F3b can act on the first sleeve S1 through the third sleeve S3 as the force Fs for preventing gear jumping out. Accordingly, without any additional components, etc. to the transmission 100, a gear jumping-out phenomenon can be prevented achieving down-sizing and reduction of weight of the transmission 100. Further, no load adjustment is needed upon the first sleeve S1 through the third sleeve S3 engagement with the meshing teeth H1 through the meshing teeth H6 and without adding a load such as addition of lock ball, the gear jumping-out can be effectively prevented. Thus, a good shift feeling can be obtained.

In such case, each center of gravity G1 through G3 of each connecting body A1 through A3 exists on the line connecting each of the pair of reference fulcrum P1 through P3.

According to this structure, by identifying each center of gravity G1 through G3 of each connecting body A1 through A3, and then for example, by considering a straight line which passes through each of the identified center of gravities G1 through G3 and which is in parallel with each axis line of the pair of pad portions F1c through F3c, the reference fulcrums P1 through P3 can be easily identified. Thus, a pair of supporting portions F1b through F3b can be easily provided on the main body portions F1a through F3a of the first shift fork F1 through the third shift fork F3. Accordingly, an appropriate rotational moment M around the pair of supporting portions F1b through F3b can be easily generated and as a result, the force Fs for preventing gear jumping out can be acted on the first sleeve S1 through the third sleeve S3. Thus, the gear jumping out phenomenon can be surely prevented.

Further, each of the first shift fork F1 through the third shift fork F3 includes a gap formed between each of the fork head F1d through the fork head F3d and each of the first inner lever I1 through the third inner lever I3 by separation of each of the fork head F1d through the fork head F3d from each of the first inner lever I1 through the third inner lever I3 caused when any one of the first sleeve S1 through the third sleeve S3 is moved towards one of the low speed side gear and the high speed side gear.

According to the structure explained above, under the state of engagement of the first sleeve S1 through the third sleeve S3 with the meshing teeth H1 through the meshing teeth H6, unnecessary vibration is inputted to the first shift fork F1 through the third shift fork F3 of the connecting body A1 through the connecting body A3 from the shaft 1 and the first inner lever I1 through the third inner lever 13. Thus, the rotational moment M without fluctuation is generated around the pair of supporting portions F1b through the pair of supporting portions F3b and as a result, the force Fs for preventing gear jumping out can be acted on the first sleeve S1 through the third sleeve S3. Thus, the gear jumping out phenomenon can be surely prevented.

The present invention is not limited to the above explained embodiment and various changes and modifications can be made within the scope of the invention.

For example, according to the above embodiment, a penetration hole is formed at the supporting portions F1b, F2b and F3b for inserting the pin "J" as the shaft body. However, instead of forming such penetration hole, a recessed portion may be formed at the supporting portions F1b, F2b and F3b for inserting the pin "J". Even in the case of providing the recessed portion, the rotational moment M can be generated by the rotation (swinging) of the first shift fork F1, the second shift fork F2 and the third shift fork F3 and as a result the effect similar to the case of the embodiment can be attained.

Further, according to the embodiment explained above, the fork head F1d through the fork head F3d as the engaging portion are projecting from the main body portion F1a through the main body portion F3a. However, instead of forming the fork head F1d through the fork head F3d projecting from the main body portion F1a through the main body portion F3a, the fork head F1d through the fork head F3d may be formed to be recessed relative to the main body portion F1a through the main body portion F3a.

Further, according to the embodiment above, the transmission 100 in which the shift select lever 990 which is to be operated by a driver of the vehicle and the shift outer lever 2 and the select outer lever 3 are connected via the speed change cables, respectively is adopted. However, as the transmission 100, for example, an automated manual transmission (AMT) in which the speed change operation is executed by the operation of the shift select lever 990 by the driver of the vehicle, or without such operation, the speed change operation is executed automatically by a driving force of the actuator in response to the vehicle running state may be adopted.

### [Reference Numerals and Signs]

1: shift select shaft, 2: shift outer lever, 3: select outer lever, 4: interlock member, 5: reverse shift fork shaft, 6: reverse shift fork connecting member, I1: first inner lever, l2: second inner lever, l3: third inner lever, F1: first shift fork, F1a: main body portion, F1b: supporting portion, F1c: pad portion (connecting portion), F1d: fork head (engaging portion), F2: second shift fork, F2a: main body portion, F2b: supporting portion, F2c: pad portion (connecting portion), F2d: fork head (engaging portion), F3: third shift fork, F3a: main body portion, F3b: supporting portion, F3c: pad portion (connecting portion), F3d: fork head (engaging portion), A1, A2, A3: connecting body, P1, P2, P3: reference fulcrum, G1, G2, G3: center of gravity.

## Claims

1. A transmission comprising:
a shift select shaft housed in a housing and moving along in an axis line and at the same time rotating about the axis line;
a shift fork arranged facing the shift select shaft and connecting the shift select shaft and a sleeve disposed in the housing and arranged between a low speed side gear and a high speed side gear which are located adjacent to each other, the sleeve being movable between the low speed side gear and the high speed side gear; and
an inner lever provided at the shift select shaft and engaging with the shift fork when positioned at a first rotation position in response to a rotation of the shift select shaft about the axis line and disengaging from the shift fork when positioned at a second rotation position which is different from the first rotation position, in response to the rotation of the shift select shaft about the axis line, wherein the shift fork includes:
a U-shaped main body portion;
an engaging portion provided at the main body portion and engaging with the inner lever which is positioned at the first rotation position;
a pair of connecting portions provided at both ends of the main body portion and connected to the sleeve; and
a pair of supporting portions provided at both sides of the main body portion and rotatably supporting the shift fork between the engaging portion and the pair of connecting portions relative to the housing and wherein
when the engaging portion engages with the inner lever and the shift select shaft moves along in the axis line, the shift fork is rotated relative to the housing about the pair of supporting portions as a rotation center thereof and at the same time the sleeve connected to the pair of connecting portions is configured to be movable between the low speed side gear and the high speed side gear; and
the pair of supporting portions is provided at a point between a pair of reference fulcrums and the pair of connecting portions, wherein a rotational moment of a connecting body formed by connecting the sleeve with the shift fork becomes zero at the pair of reference fulcrums.

2. The transmission according to claim 1, wherein
a center of gravity of the connecting body exists on a line connecting the pair of reference fulcrums.

3. The transmission according to claim 1 or 2, wherein
a gap is formed at the shift fork between the engaging portion and the inner lever by separation of the engaging portion from the inner lever when the sleeve is moved towards any one the low speed side gear and the high speed side gear.

## Amended claims

### Amended claims under Art. 19.1 PCT

1. (After amendment) A transmission comprising:
a shift select shaft housed in a housing and moving along in an axis line and at the same time rotating about the axis line;
a plurality of shift forks arranged facing the shift select shaft and connecting the shift select shaft and a sleeve disposed in the housing and arranged between a low speed side gear and a high speed side gear which are located adjacent to each other, the sleeve being movable between the low speed side gear and the high speed side gear; and
an inner lever provided at the shift select shaft and engaging with the plurality of shift forks when positioned at a first rotation position in response to a rotation of the shift select shaft about the axis line and disengaging from the plurality of shift forks when positioned at a second rotation position which is different from the first rotation position, in response to the rotation of the shift select shaft about the axis line, wherein at least one of the plurality of shift forks includes:
a U-shaped main body portion which is formed riding over the shift select shaft;
an engaging portion provided at the main body portion and engaging with the inner lever which is positioned at the first rotation position, and at the same time projecting towards the shift select shaft from a surface of the main body portion facing to the shift select shaft;
a pair of connecting portions provided at both ends of the main body portion and connected to the sleeve; and
a pair of supporting portions provided at both sides of the main body portion and rotatably supporting the plurality of shift forks between the engaging portion and the pair of connecting portions relative to the housing and wherein
when the engaging portion engages with the inner lever and the shift select shaft moves along in the axis line, the plurality of shift forks is rotated relative to the housing about the pair of supporting portions as a rotation center thereof and at the same time the sleeve connected to the pair of connecting portions is configured to be movable between the low speed side gear and the high speed side gear; and
the pair of supporting portions is provided at a point between a pair of reference fulcrums and the pair of connecting portions, wherein a rotational moment of a connecting body formed by connecting the sleeve with the plurality of shift forks becomes zero at the pair of reference fulcrums..

2. The transmission according to claim 1, wherein
a center of gravity of the connecting body exists on a line connecting the pair of reference fulcrums.

3. The transmission according to claim 1 or 2, wherein
a gap is formed at the shift fork between the engaging portion and the inner lever by separation of the engaging portion from the inner lever when the sleeve is moved towards any one the low speed side gear and the high speed side gear.
